# EUROPEAN PATENT SPECIFICATION

(11) **EP 3 398 970 B1**
(45) Date of publication and mention of the grant of the patent: **12.02.2020**
(21) Application number: 18170831.4
(22) Date of filing: 04.05.2018
(51) Int. Cl.: C08B 5/00, C08L 1/02

(54) **A METHOD OF SYNTHESIZING CELLULOSE CARBONATE**
VERFAHREN ZUR HERSTELLUNG VON CELLULOSECARBONAT
PROCÉDÉ DE SYNTHÈSE DE CARBONATE DE CELLULOSE

(30) Priority: 05.05.2017 SG 10201703736P
(43) Date of publication of application: 07.11.2018
(73) Proprietor: Agency for Science, Technology and Research, Singapore 138632 (SG)
(72) Inventor: LUO, He-Kuan, 138634 Singapore (SG); LEE, Agnes Mei Xian, 138634 Singapore (SG); HUANG, Sheng-Li, 138634 Singapore (SG)
(74) Representative: Viering, Jentschura & Partner mbB Patent- und Rechtsanwälte

(56) References cited:
- EP-A2- 0 532 995
- WO-A2-2011/161326
- US-A- 3 705 890

## Description

### Technical Field

The present disclosure relates to a method of synthesizing cellulose carbonate.

### Background

Cellulose carbonates are a promising class of cellulose derivatives, which can be used to fabricate films and fibers. However, the advancement and applications of these materials are hindered by their synthetic methods.

Since 1971, cellulose carbonates are specifically synthesized by reacting cellulose with chloroformates. The chloroformates, however, are toxic, highly reactive and expensive. Documents US 3,705,890 and EP-A-0 532 995 disclose different approaches to cellulose carbonates.

In 2015, it was reported that cellulose methyl carbonate may be synthesized with dimethyl carbonate in the ionic liquid-electrolyte trioctylphosphonium acetate ([P8881][OAc])/DMSO or 1-ethyl-3-methylimidazolium acetate ([emim][OAc]). This method, however, is not only limited to synthesis of cellulose methyl carbonate, but the ionic liquids are also expensive, toxic and difficult to recycle.

There is thus a need to provide for a method of synthesizing cellulose carbonates that ameliorates or resolves one or more of the above issues. The method should at least provide for the synthesis of cellulose carbonates from inexpensive and common feed stocks.

### Summary

In one aspect, there is provided for a method of synthesizing cellulose carbonate, comprising:
mixing a solution comprising dimethyl sulfoxide and cellulose with an organic base in the presence of carbon dioxide to form a cellulose solution comprising cellulose carbonate anions, wherein the organic base is represented by a formula of: 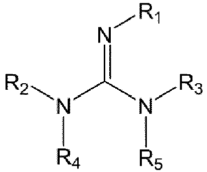
   wherein each of R₁, R₂ and R₃ is C₁-C₂₀ alkyl;
   wherein each of R₄ and R₅ is hydrogen or C₁-C₂₀ alkyl;
contacting the cellulose solution with one or more organochlorides in the presence of carbon dioxide to form the cellulose carbonate; and
adding an alcohol or water to precipitate the cellulose carbonate.

### Detailed Description

The embodiments that are described in the present disclosure are in sufficient detail to enable those skilled in the art to practice the invention. Other embodiments may be utilized and structural, and logical changes may be made without departing from the scope of the invention. The various embodiments are not necessarily mutually exclusive, as some embodiments can be combined with one or more other embodiments to form new embodiments.

Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

The present disclosure relates to a method of synthesizing cellulose carbonate. Specifically, the present disclosure relates to a method of synthesizing cellulose carbonate from cellulose and an organochloride, using CO₂ and an organic base.

Advantageously, the present method is beneficial to the environment as it utilizes CO₂ as a feed stock, which is an abundant greenhouse gas, and converting the greenhouse gas CO₂ into cellulose carbonate.

The present method serves as an economic route for synthesizing cellulose carbonates as it utilizes common and inexpensive feed stocks, such as CO₂ and organochlorides, instead of expensive and toxic materials, such as chloroformates.

The present method is versatile in that it is not limited to a specific type of organochlorides but various types of organochlorides can be utilized for synthesizing cellulose carbonates. Various types of cellulose carbonates can therefore be synthesized from the various types of organochlorides.

Advantageously, the present method allows for synthesis of cellulose carbonate using mild reaction conditions, i.e. room temperatures of 20°C to 40°C and 1 atm (101,325 Pa) CO₂.

In the present method, cellulose, which is known to have difficulty dissolving in water and most organic solvents, can be rapidly dissolved in dimethyl sulfoxide (DMSO) through the use of an organic base, and converted to cellulose carbonate anion using CO₂. The organic base may be an aprotic organic base including, but not limited to, 2-tert-butyl-1,1,3,3-tetramethylguanidine (BTMG). The cellulose carbonate anions, which possess the -OCOO⁻ groups, act as strong nucleophiles that can attack an alpha-carbon of an organochloride to form cellulose carbonate.

Having outlined various advantages of the present method, definitions of certain terms are first discussed before going into details of the various embodiments.

The term "aprotic" as used herein refers to a substance that does not donate hydrogen or hydrogen ion. For example, an aprotic organic base would refer to an organic base that does not donate hydrogen or hydrogen ion.

The term "alkyl" as used herein, as a group or part of a group, refers to a straight or branched aliphatic hydrocarbon group, including but not limited to, a C₁-C₂₀ alkyl, C₁-C₁₂ alkyl, a C₁-C₁₀ alkyl, a C₁-C₆ alkyl. Examples of suitable straight and branched C₁-C₆ alkyl substituents include methyl, ethyl, n-propyl, 2-propyl, n-butyl, sec-butyl, t-butyl, hexyl, and the like. Alkyl groups may be substituted or unsubstituted.

The expression "cellulose-OCOO⁻" as used herein refers to a cellulose carbonate anion.

The expression "cellulose-O⁻" as used herein is to specifically refer to a deprotonated cellulose or that the hydroxyl group of the cellulose has been deprotonated.

The expression "cellulose-OH" as used herein is to specifically refer to the OH group attached to the cellulose. For example, when a molar ratio of BTMG to cellulose-OH is 1:1, this means that the molar ratio of BTMG with respect to a hydroxyl group of the cellulose is 1:1, and the molar ratio of BTMG to one repeating unit (see scheme 3 in the example section) of cellulose would be 3:1.

The word "substantially" does not exclude "completely" e.g. a composition which is "substantially free" from Y may be completely free from Y. Where necessary, the word "substantially" may be omitted from the definition of the invention.

In the context of various embodiments, the articles "a", "an" and "the" as used with regard to a feature or element include a reference to one or more of the features or elements.

In the context of various embodiments, the term "about" or "approximately" as applied to a numeric value encompasses the exact value and a reasonable variance.

As used herein, the term "and/or" includes any and all combinations of one or more of the associated listed items.

Unless specified otherwise, the terms "comprising" and "comprise", and grammatical variants thereof, are intended to represent "open" or "inclusive" language such that they include recited elements but also permit inclusion of additional, unrecited elements.

Having defined the various terms as mentioned above, details of the various embodiments are now described below.

In the present disclosure, there is provided for a method of synthesizing cellulose carbonate, the method comprising mixing a solution comprising dimethyl sulfoxide and cellulose with an organic base in the presence of carbon dioxide to form a cellulose solution comprising cellulose carbonate anions, wherein the organic base is represented by a formula of: 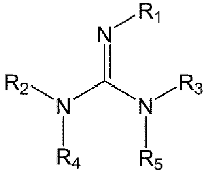 wherein each of R₁, R₂ and R₃ is C₁-C₂₀ alkyl, wherein each of R₄ and R₅ is hydrogen or C₁-C₂₀ alkyl, contacting the cellulose solution with one or more organochlorides in the presence of carbon dioxide to form cellulose carbonate, and adding an alcohol or water to precipitate the cellulose carbonate.

The first part of the method, which involves mixing the solution comprising dimethyl sulfoxide and cellulose with the organic base in the presence of CO₂, e.g. at room temperature, helps to dissolve the cellulose rapidly to form a cellulose solution comprising a "self-forming switchable" cellulose carbonate anion. Such a cellulose solution may be referred to as a "switchable system" in the present disclosure. While the first part of the present method is carried out at mild reaction conditions, the cellulose not only dissolves in the dimethyl sulfoxide solvent but also dissolves faster compared to conventional solvents. An example of the mild reaction conditions may be 1 atm (101,325 Pa) CO₂ and 22°C.

The switchable system is different in nature compared to conventional switchable ionic compounds. The switchable system refers to the solution of cellulose carbonate anion which is switchable as shown in the scheme below, depicting BTMG as a non-limiting example of the organic base. "n" in the scheme below may be from 1 to 100,000.

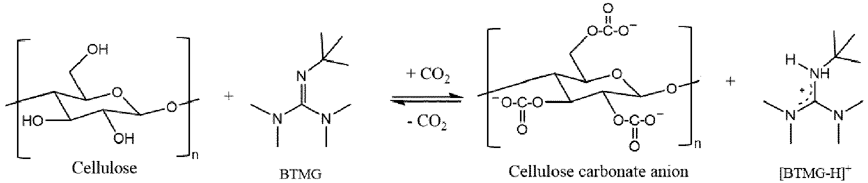

From the scheme shown above, the switching can be triggered by CO₂, which is abdundant in nature, without any alcohol. Hence, the use of alcohol for the dissolution of cellulose can be circumvented. As the reaction allows the cellulose carbonate anion to be converted (i.e. switched) between cellulose and cellulose carbonate anion, the present solution system may be called a "switchable system" or a cellulose solution of "self-forming switchable" cellulose carbonate anion.

Even though the first part of the present method is mainly used to dissolve cellulose, the cellulose that has been dissolved in the first part can be regenerated before contacting the one or more organochlorides based on the scheme above. The cellulose can be regenerated into useful materials, such as fibres and films. The regenerated cellulose can be re-dissolved based on the switchable system shown in the above scheme.

As described above, dimethyl sulfoxide serves as the organic solvent for cellulose to be dissolved in. That is to say, the organic base is not a solvent for dissolving the cellulose. Rather, the organic base is used to deprotonate cellulose.

As mentioned above, the organic base is represented by the formula below.

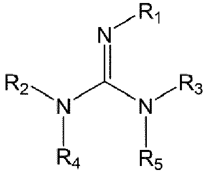

In various embodiments, each of R₁, R₂ and R₃ in the above formula may be C₁-C₂₀ alkyl, C₁-C₁₀ alkyl or C₁-C₆ alkyl. In various embodiments, each of R₄ and R₅ in the above formula may be hydrogen or C₁-C₂₀ alkyl, C₁-C₁₀ alkyl or C₁-C₆ alkyl. Organic bases encompassed by the above formula and usable in the present method may comprise 2-tert-butyl-1,1,3,3-tetramethylguanidine (BTMG), 1,2,3-triisopropylguanidine (TIPG), 2-butyl-1,3-diisopropylguanidine (BDPG), or their combination thereof. The organic bases used in the present method may be called aprotic organic bases as they do not donate, but accept hydrogen or hydrogen ion(s) when used for deprotonating cellulose. In some embodiments, the organic base may be BTMG. The organic bases mentioned above are shown below.

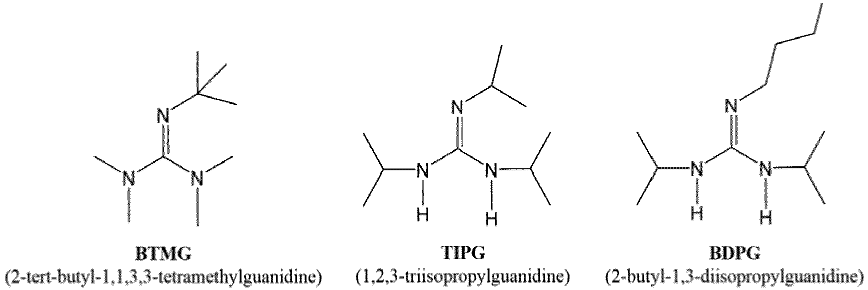

While there may be conventional chemicals such as 1,1,3,3-tetramethylguanidine (TBG), 1,8-diazabicyclo[5.4.0]undec-7-ene (DBU) and phosphazene base (P₂-Et) that can be used to dissolve cellulose by forming switchable ionic systems, the cellulose carbonates resulting from the use of such conventional chemicals unfortunately tend to suffer from poor degree of substitution (DS), i.e. only a small number of hydroxy groups are transformed to cellulose carbonates in the product. The chemical structure of these conventional chemicals and BTMG are shown below.

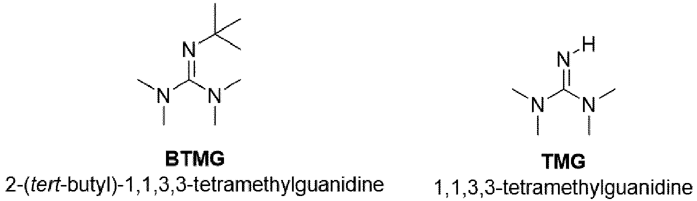

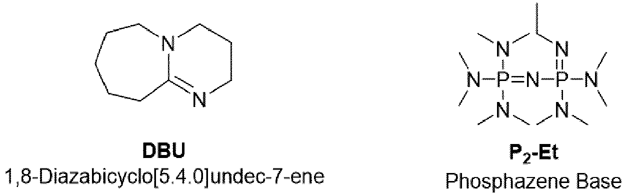

Advantageously, aprotic organic bases such as those disclosed herein, including but not limited to, BTMG, produces cellulose carbonates with DS up to 1.8, which is not expected for the present method where cellulose carbonates are synthesized from common feedstocks (i.e. CO₂ and organochlorides) at mild conditions (room temperature and 1 atm (101,325 Pa) CO₂). Therefore, the present method is advantageous for the synthesis of cellulose carbonates.

In various embodiments, the mixing may be carried out at a temperature of 20°C to 40°C, 25°C to 40°C, 30°C to 40°C, 35°C to 40°C, 20°C to 35°C, 25°C to 35°C, 30°C to 35°C, 20°C to 30°C, 25°C to 30°C, 20°C to 25°C, etc. In some embodiments, the mixing may be carried out at a temperature of 22°C. Advantageously, the present method of synthesizing cellulose carbonate does not require temperatures higher than room temperatures, such as the temperatures specified above.

In various embodiments, the carbon dioxide in the mixing step, and the contacting step, may have a pressure of at least 1 atm (101,325 Pa). For example, the CO₂ pressure may be 1 atm (101,325 Pa) to 20 atm (2,026,500 Pa). In various embodiments, the CO₂ pressure may be 1 atm (101,325 Pa).

The present method is also advantageous because it is not restricted but applicable to various types of cellulose. In various embodiments, the cellulose used may comprise microcrystalline cellulose, amorphous cellulose or cotton. The cellulose used may also be a combination of such celluloses.

In various embodiments, the cellulose dissolution in the first part of the method (i.e. the mixing step) may occur at different molar ratios of organic base to cellulose-OH. The molar ratio of organic base to cellulose-OH is used to specifically refer to the molar ratio between the organic base and a hydroxyl (OH) group of the cellulose. This is not to be confused with a molar ratio of organic base to cellulose, as cellulose is made up of repeating units each having three hydroxyl groups, where a single repeating unit is shown below.

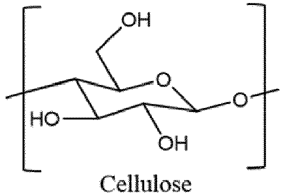

If the molar ratio of organic base to cellulose is used instead of organic base to cellulose-OH, then a molar ratio of 3:1 should be used instead of 1:1. Having discussed the significance of the expression of "cellulose-OH", the mixing may be carried out based on a molar ratio of organic base to cellulose-OH ranging from 0.50 to 3.00 according to various embodiments. Advantageously, by employing a ratio as discussed above, a higher concentration of cellulose in the solution may be obtained. In some embodiments, the molar ratio of organic base to cellulose-OH may be 1 to 1. In some instances, where BTMG is used as the organic base, the BTMG may be mixed with the cellulose in a molar ratio of BTMG to cellulose-OH ranging from 0.50 to 3.00, 1 to 1, etc.

In various embodiments, the cellulose solution, formed from the mixing step, may further comprise cellulose-O⁻ anions and/or a protonated form of the organic base. This is because the cellulose-OH loses the hydrogen to the aprotic organic base and form an intermediate deprotonated cellulose, i.e. cellulose-O⁻. The intermediate is shown in the scheme below, where the circle illustrates the backbone of cellulose.

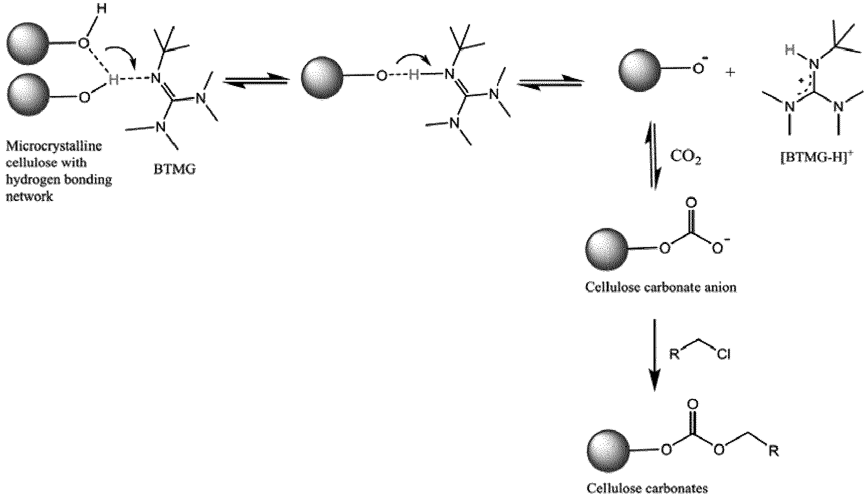

As shown in the above scheme, the intermediate deprotonated cellulose may react with CO₂ for the reaction to proceed to form cellulose carbonate anions. Where BTMG is used as the organic base, the protonated form of the organic base may comprise [BTMG-H]⁺. Thus, in embodiments where BTMG is used, the cellulose solution, formed from the mixing step, may further comprise [BTMG-H]⁺ and/or the cellulose-O⁻ anions.

In various embodiments, the second part of the method involves contacting the cellulose solution with one or more organochlorides. The contacting may be carried out at a temperature of 20°C to 40°C, 25°C to 40°C, 30°C to 40°C, 35°C to 40°C, 20°C to 35°C, 25°C to 35°C, 30°C to 35°C, 20°C to 30°C, 25°C to 30°C, 20°C to 25°C, etc. In some embodiments, the mixing may be carried out at a temperature of 22°C. The contacting may be carried out in the presence of CO₂. The CO₂ may be at a pressure of at least 1 atm (101,325 Pa). For example, the CO₂ pressure for the contacting step may be 1 atm (101,325 Pa) to 20 atm (2,026,500 Pa). In various embodiments, the CO₂ pressure for the contacting step may be 1 atm (101,325 Pa).

In various embodiments, the contacting step may be carried out for a duration of 1 hour to 72 hours. The duration may be used to control the degree of substitution of the resultant cellulose carbonate. By employing a longer duration for the reaction, a higher degree of substitution may thus be obtained.

In various embodiments, the one or more organochlorides may be selected from the group consisting of benzyl chloride, 4-(trifluoromethyl) benzyl chloride, 4-methylbenzyl chloride, 4-(tert-butyl)benzyl chloride, 4-methoxybenzyl chloride, 3,4-dichlorobenzyl chloride, 2,4-dichlorobenzyl chloride, *N*-(4-(chloromethyl)phenyl)-4-(trifluoromethyl)benzamide, *N*-(4-(chloromethyl)phenyl)benzamide, 4-chloro-*N*-(4-(chloromethyl)phenyl)benzamide, and ethyl chloroacetate. Some examples of organochlorides are shown below.

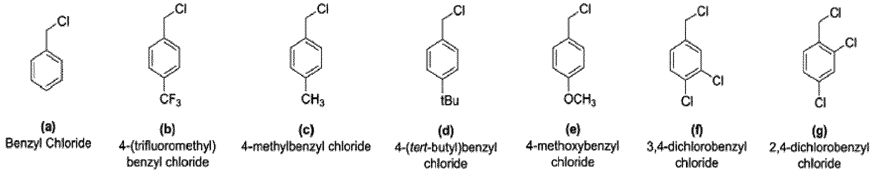

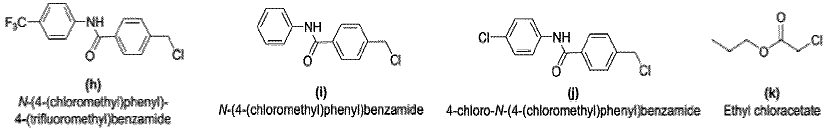

After the cellulose carbonate is formed from reacting the cellulose carbonate anions with the one or more organochlorides, the resultant cellulose carbonate may be obtained by precipitation. In various embodiments, the cellulose carbonate may be precipitated by using alcohol or water. The alcohol, for example, may comprise methanol or ethanol. Other suitable alcohols may be used. The water may comprise deionized water.

In various embodiments, the cellulose carbonate, as synthesized from the present method, may comprise repeating units each represented by a formula of: 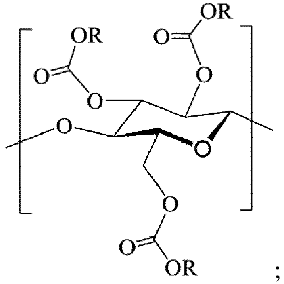 wherein each of the R may be independently selected from the group consisting of 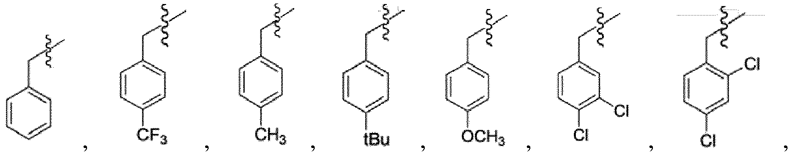 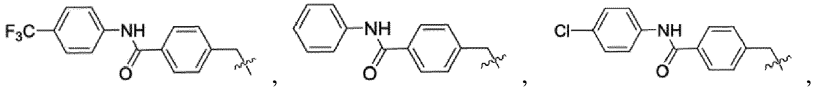 and

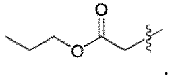

In various embodiments, the resultant cellulose carbonate generated via the present method may also be represented by the formula: 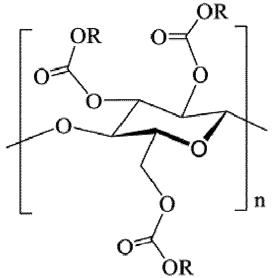 wherein R is as defined above and n may be from 1 to 100,000.

The cellulose carbonates generated in the present method can further undergo acetylation. Thus, after generating the cellulose carbonates according to the present method, there may be a step of mixing the cellulose carbonate(s) with an organic medium comprising dimethylformamide, pyridine and acetic anhydride. The mixing may be carried out for 24 hours at 50°C to 70°C. Thereafter, an aqueous medium comprising NaHCO₃ may be added.

While the methods described above are illustrated and described as a series of steps or events, it will be appreciated that some steps, for example, may occur in different orders and/or concurrently with other steps or events apart from those illustrated and/or described herein. In addition, not all illustrated steps may be required to implement one or more aspects or embodiments described herein. Also, one or more of the steps depicted herein may be carried out in one or more separate acts and/or phases.

### Examples

The present disclosure relates to a method of synthesizing cellulose carbonate. In summary, the present method involves a rapid step of dissolving cellulose with an organic base in the presence of CO₂ to form a cellulose solution. One example of the organic base is 2-(*tert*-butyl)-1,1,3,3-tetramethyl guanidine (BTMG), and the CO₂ may be at 1 atm (101,325 Pa). In the obtained cellulose solution, the cellulose carbonate anions, i.e. cellulose-OCOO⁻ groups, was converted from cellulose-OH. Subsequently, an organochloride is added to the cellulose solution. A nucleophilic substitution occurs between the cellulose carbonate anions and organochloride at room temperature (e.g. 20°C to 40°C) and 1 atm (101,325 Pa) CO₂ to produce cellulose carbonates. The reaction condition is mild and the feed stocks (CO₂ and organochlorides) are common and inexpensive. All the obtained cellulose carbonates are useful materials.

The present method and uses of the cellulose carbonates derived from the present method, are described in the examples below.

### Example 1: Materials and Characterization Used

All manipulations were carried out under an atmosphere of nitrogen or argon by using standard Schlenk line techniques. ¹H and ¹³C-NMR (nuclear magnetic resonance) spectra were recorded in DMSO-*d₆* on a BRUKER 400 MHz spectrometer. FT-IR (Fourier Transform-Infrared) spectra were recorded on Perkin Elmer Spectrum 2000 FT-IR Spectrometer. Benzyl chloride (99%), 4-(trifluoro)benzyl chloride (98%), 4-(*tert*-butyl)benzyl chloride (99%), 4-methylbenzyl chloride (98%), 4-methoxybenzyl chloride (98%), ethyl chloroacetate (99%) and 2-(*tert*-butyl)-1,1,3,3-tetramethylguanidine (BTMG, 97%) were purchased from Sigma Aldrich. Microcrystalline cellulose (MCC), 3,4-dichlorobenzyl chloride (98%) and pyridine (99%) were purchased from Alfa Aesar. 2,4-dichlorobenzyl chloride (99%) and acetic anhydride (99%) were purchased from Acros Organics. N,N-dimethylforamide was purchased from TEDIA. Anhydrous DMSO was purchased from Sigma Aldrich. DMSO-*d₆* was purchased from Cambridge Isotope Laboratories. All chemicals and solvents were used as received. CO₂ gas was purchased from Air Liquid.

### Example 2a: Discussion - Rapid Activation of Cellulose and Subsequent Transformation to Cellulose Carbonates

In order to transform cellulose to cellulose carbonates, the present method has been developed. The present method involves dissolving and activating cellulose, for example, with aprotic BTMG in 1 atm (101,325 Pa) CO₂. ¹H and ¹³C-NMR revealed that cellulose-OH was converted to cellulose carbonate anions, i.e. cellulose-OCOO⁻ groups, which were activated and ready for transformations.

As the cellulose-OCOO⁻ anion may act as a strong nucleophile, it can attack the alpha-carbon atom in an organochloride, leading to a nucleophilic substitution to form cellulose carbonate at room temperature (e.g. 20°C to 40°C) (see scheme 1 below). In light of this, various organochlorides were added to the cellulose solution for developing the present method. After stirring for 1 to 3 days at room temperature, the product was precipitated by the addition of DI (deionized) water, followed by washing with DI water, methanol and ether, and dried in vacuum overnight at room temperature. Scheme 1 below specifically shows the hydroxyl group of the cellulose, the deprotonated cellulose and the cellulose carbonate anion, as illustrated by the -OH group attached to the circle, the -O⁻ group attached to the circle and the -OCOO⁻ group attached to the circle, respectively. The circle represents the cellulose backbone.

### Scheme 1: Rapid dissolution of cellulose and subsequent transformation to cellulose carbonates

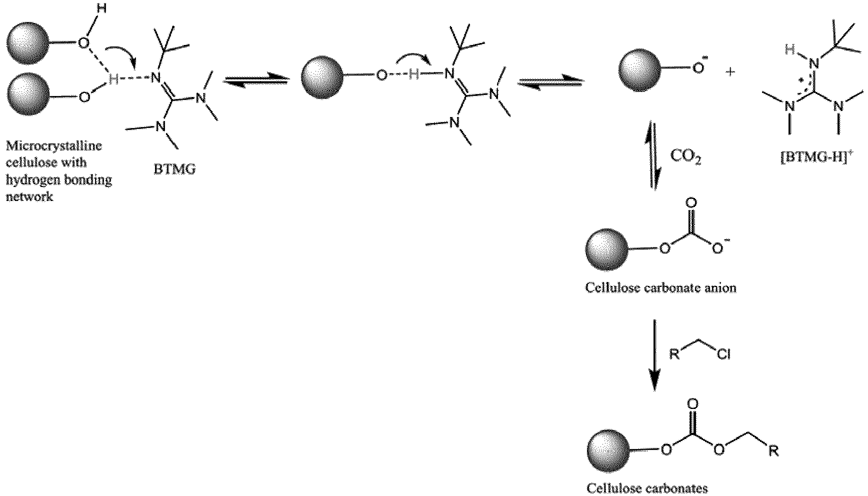

Since the product is a polymer, its isolation and quantitative yield was easily established. The formation of cellulose carbonate is confirmed by FT-IR with the 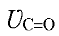 of carbonate at about 1750 cm⁻¹, and the presence of ¹³C-NMR shift of carbonate at about 155 ppm. All the obtained cellulose carbonates are soluble in DMSO.

### Example 2b: Discussion - Synthesis of Cellulose Carbonates with Various Organochlorides

Various cellulose carbonates were synthesized from different organochlorides (see scheme 2 below). The structures of the resultant cellulose carbonates derived from each of the various organochlorides in scheme 2 are shown in scheme 3 below. Scheme 3 specifically depicts the chemical structure of the basic repeating unit of the cellulose carbonates and the various groups for each of the R in that chemical structure. The values of DS (degree of substitution) are listed in table 1 below.

### Scheme 2: Organochlorides used for synthesis of cellulose carbonates

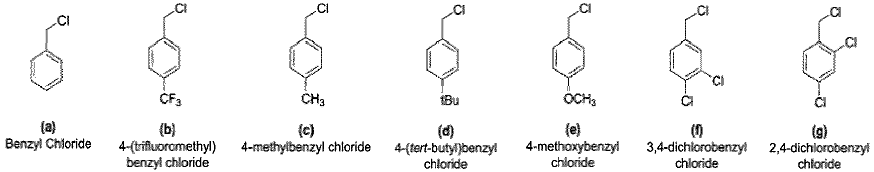

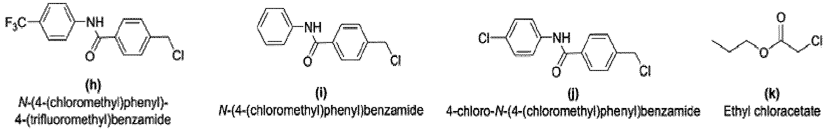

### Scheme 3: Structure of synthesized cellulose carbonates

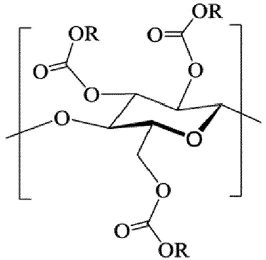

Basic repeating unit of cellulose carbonate
(R can be any of the substituents shown below)

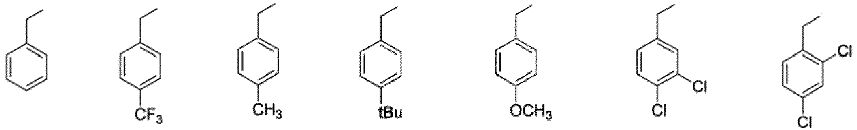

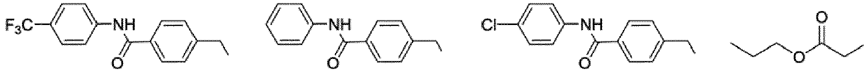

**Table 1: Degree of substitution**

| **Entry** | **Product** | **Chloride** | **Time (days)** | **Chemical shift of C=O in ¹³C-NMR** | 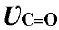 **in FT-IR** | **DS^{a}** |
|---|---|---|---|---|---|---|
| 1 | 1 | a | 1 | 154.33 | 1751.7 | 1.15^{b} |
| 2 | 1 | a | 3 | 154.33 | 1751.7 | 1.83^{b} |
| 3 | 2 | b | 1 | 154.16 | 1758.3 | 1.48^{b} |
| 4 | 3 | c | 1 | 154.28 | 1752.0 | 1.29^{b} |
| 5 | 4 | d | 1 | 154.52 | 1751.9 | 1.38^{b} |
| 6 | 5 | e | 1 | 154.44 | 1739.9 | 1.25^{b} |
| 7 | 6 | f | 1 | 153.99 | 1748.3 | 1.49^{b} |
| 8 | 6 | f | 2 | 154.00 | 1748.3 | 1.60^{b} |
| 9 | 6 | f | 3 | 154.00 | 1748.3 | 1.82^{b} |
| 10 | 7 | g | 1 | 153.98 | 1752.5 | 1.74^{b} |
| 11 | 7 | g | 3 | 153.98 | 1752.2 | 1.83^{b} |
| 12 | 8 | h | 3 | 154.34 | 1752.2 | 1.29^{c} |
| 13 | 9 | i | 3 | 154.41 | 1746.3 | 0.77^{c} |
| 14 | 10 | j | 3 | 154.50 | 1746.8 | 0.55^{c} |
| 15 | 10 | j | 3 | 154.31 | 1746.8 | 1.01^{b} |
| 16 | 11 | k | 1 | 154.10 | 1751.4 | 0.86^{d} |

| | | | | | | |
|---|---|---|---|---|---|---|
| Reaction conditions: MCC 0.19 g, DMSO 0.95 g, BTMG 0.855 g, at room temperature (22°C) and 1 atm (101,325 Pa) CO₂. ^{a}DS (degree of substitution) was determined by ¹H-NMR after acetylation. ^{b}The molar ratio of cellulose-OH to organochloride is 1:3. ^{c}The molar ratio of cellulose-OH to organochloride is 1:1. ^{d}Conditions: MCC 0.539 g, DMSO 9.0 g, BTMG 1.71 g, cellulose-OH/organochloride = 1:3, at 22°C and 1 atm (101,325 Pa) CO₂. | | | | | | |

The organochlorides a to g and k are commercially available. The three bulky substrates h, i and j were synthesized (see scheme 4 in example 3c). For 24 hours run at room temperature, the chlorides a to g and k gave DS values of 1.15, 1.48, 1.29, 1.38, 1.25, 1.49, 1.74 and 0.86, respectively (entries 1, 3 to 7, 10 and 16, respectively). In comparison, the three substrates b, f and g, which have strong electron withdrawing groups, gave higher DS values of 1.48, 1.49 and 1.74, respectively (entries 3, 7 and 10, respectively) compared to the others.

For substrates a, f and g, when the reaction time was extended from one day to three days, the DS values increased from 1.15, 1.49, 1.74 to 1.83, 1.82 and 1.83 (entries 2, 9 and 11), respectively. For substrate f, the effect of reaction time was investigated. When the reaction time was prolonged from 1 day to 2 days and further to 3 days, the DS increased from 1.49 to 1.60 and further to 1.82, respectively.

For the bulky substrates h, i and j, when the molar ratio of cellulose-OH to organochloride was 1:1 for a reaction duration of 3 days, the obtained DS values are 1.29, 0.77 and 0.55 (entries 12 to 14), respectively. This result showed that the substrate h bearing strong electron withdrawing CF₃ group gave higher DS compared to substrates i and j without CF₃ group. For substrate j, when the molar ratio of cellulose-OH to organochloride was increased from 1:1 to 1:3, the DS value was increased from 0.58 to 1.08 (entry 15).

### Example 3a: Experimental - General Procedure for Synthesis of Cellulose Carbonates at Room Temperature and 1 atm (101,325 Pa) CO₂

Anhydrous DMSO was added to a 100 mL dried Schlenk tube charged with a desired amount of cellulose and stirred to form a suspension. The reactor was vacuumed and re-filled with CO₂ twice using a CO₂ gas balloon. Subsequently, the desired amount of BTMG was added within 1 minute, and cellulose dissolved instantly to give rise to a clear solution. After stirring for 10 minutes, a desired amount of organochloride was added dropwise to avoid precipitation of cellulose. After the reaction was run at room temperature (e.g. 20°C to 40°C) and in 1 atm (101,325 Pa) CO₂ for 1 to 3 days, the product was precipitated out from the reaction mixture by the addition of 40 mL DI water. The solid product was filtered, washed with DI water (3 times of 40 mL), methanol (3 times of 40 mL), diethyl ether (3 times of 40 mL), and dried in vacuum overnight. The product was characterized with ¹H-NMR, ¹³C-NMR and FT-IR. DS (degree of substitution) was determined with ¹H-NMR after acetylation.

### Example 3b: Experimental - General Procedure for Acetylation of Cellulose Carbonates

Cellulose carbonate (100 mg) and 5 mL DMF were added to a 100 mL dried Schlenk tube, and stirred to form a solution. Subsequently, pyridine (5 mL, 61.8 mmol) and acetic anhydride (5 mL, 52.9 mmol) were added. The reaction mixture was stirred at 60°C for 24 hours. The product was then precipitated out from the reaction mixture by the addition of 50 mL of an aqueous solution (NaHCO₃, 1 wt%), then filtered and washed with DI water (2 times of 50 mL) and methanol (2 times of 50 mL). The product was dried in vacuum overnight.

### Example 3c: Experimental - Synthesis of 4-(chloromethyl)-4'-R-benzanilides

4-(chloromethyl)benzoyl chloride was first synthesized by adding thionyl chloride (30 mL, 1 mmol/mL in dichloromethane) to 4-(chloromethyl)benzoic acid (10 mmol). The solution was refluxed for three days in N₂ atmosphere. After that, the unreacted thionyl chloride was removed by vacuum. This is shown in scheme 4 below.

### Scheme 4: Synthetic procedure for substrates h, i and j of scheme 2.

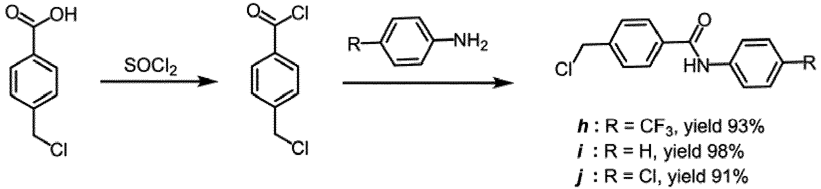

For the synthesis of substrates h, i and j, the mixture of corresponding aniline (9 mmol) and triethylamine (10 mmol) in dichloromethane (30 mL) was added dropwise to the dichloromethane solution of 4-(chloromethyl)benzoyl chloride (10 mmol) at room temperature under stirring. The reaction mixture was refluxed for 8 hours in N₂ atmosphere. After cooling to room temperature, the mixture was slowly poured into ice water (50 mL). The solution was subsequently extracted with dichloromethane and the organic phase was dried with sodium sulfate anhydrous. After removal of the dichloromethane, the solid residue was purified by recrystallization with dichloromethane/ether to give the corresponding compound. The yield and NMR characterization results are provided below.

**(*****R=CF₃, substrate** =* ***CF₃: h*):** Yield 93%. ¹H-NMR (400 MHz, DMSO-*d₆*) δ = 4.85 (s, 2H), 7.61 (d, *J*_{C-H} = 8.1 Hz, 2H), 7.73 (d, *J*_{C-H} = 8.6 Hz, 2H), 7.98 (d, *J*_{C-H} = 8.2 Hz, 2H), 8.01 (d, *J*_{C-H} = 8.5 Hz, 2H), 10.61 (s, 1H); ¹³C-NMR (100 MHz, DMSO) δ = 46.22, 120.98, 124.54 (q, *J*_{C-F} = 31.8 Hz, 1C), 126.80, 129.18, 129.69, 135.19, 142.30, 143.62, 166.46. Elemental analysis calc. for C₁₅H₁₁ClF₃NO (%): C, 57.43; H, 3.53; N, 4.46. Found: C, 57.31; H, 3.68; N, 4.31.

***(R=H, substrate = i):*** Yield 98%. ¹H-NMR (400 MHz, DMSO-*d₆*) δ = 4.83 (s, 2H), 7.09 (t, *J*_{C-H} = 7.4 Hz, 1H), 7.34 (t, *J*_{C-H} = 7.9 Hz, 2H), 7.57 (d, *J*_{C-H} = 8.2 Hz, 2H), 7.75 (d, *J*_{C-H} = 7.8 Hz, 2H), 7.93 (d, *J*_{C-H} = 8.2 Hz, 2H), 10.25 (s, 1H); ¹³C-NMR (100 MHz, DMSO-*d*₆) δ = 46.29, 121.23, 124.58, 128.90, 129.48, 129.63, 135.70, 139.96, 141.88, 165.96. Elemental analysis calc. for C₁₄H₁₂ClNO (%): C, 68.44; H, 4.92; N, 5.70. Found: C, 68.30; H, 5.11; N, 5.53.

***(R=Cl, substrate*** = ***j)***: Yield 91%. ¹H-NMR (400 MHz, DMSO-d₆) δ = 4.83 (s, 2H), 7.41 (d, J_{C-H} = 8.6 Hz, 2H), 7.59 (d, J_{C-H} = 8.2 Hz, 2H), 7.79 (d, J_{C-H} = 8.9 Hz, 2H), 7.92 (d, J_{C-H} = 8.2 Hz, 2H), 10.38 (s, 1H). Elemental analysis calc. for C₁₄H₁₁Cl₂NO (%): C, 60.02; H, 3.96; N, 5.00. Found: C, 59.88; H, 4.11; N, 4.83.

### Example 4: Advantages of Present Method, Commercial and Potential Applications

Compared to the synthesis of cellulose carbonates using conventional chloroformates, or dimethylcarbonate in ionic liquids, the present method has at least two advantages.

First, common and inexpensive feed stocks, i.e. CO₂ and organochlorides, are used instead of toxic and expensive chloroformates. The present method is thus advantageous in that it is an environmentally beneficial and sustainable method as it utilizes the greenhouse gas CO₂ as a feed stock, making the present method of transforming CO₂ into functional materials attractive.

Second, many organochlorides in the market can be compatibly utilized for the present method to synthesize various cellulose carbonates. Such new functional materials may find applications in films and fibres. In comparison, there are only a limited number of simple chloroformates in the market, such as benzyl chloroformate and ethyl chloroformate, which only lead to a limited number of cellulose carbonates. The other conventional method of using dimethylcarbonate in ionic liquids is limited to synthesis of cellulose methylcarbonate.

The present method has been developed to synthesize cellulose carbonates using CO₂ and organochlorides at room temperature in 1 atm (101,325 Pa) CO₂. Various organochlorides can be used in the present method to produce a family of cellulose carbonates. The present method is beneficial for the environment as it uses CO₂ as feed stock, which is a major greenhouse gas. The obtained cellulose carbonates can be used as functional materials.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims and all changes which come within the meaning and range of equivalency of the claims are therefore intended to be embraced.

## Claims

1. A method of synthesizing cellulose carbonate, comprising:
mixing a solution comprising dimethyl sulfoxide and cellulose with an organic base in the presence of carbon dioxide to form a cellulose solution comprising cellulose carbonate anions, wherein the organic base is represented by a formula of: 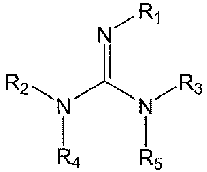
wherein each of R₁, R₂ and R₃ is C₁-C₂₀ alkyl;
wherein each of R₄ and R₅ is hydrogen or C₁-C₂₀ alkyl;
contacting the cellulose solution with one or more organochlorides in the presence of carbon dioxide to form the cellulose carbonate; and
adding an alcohol or water to precipitate the cellulose carbonate.

2. The method according to claim 1, wherein the organic base comprises 2-tert-butyl-1,1,3,3-tetramethylguanidine (BTMG), 1,2,3-triisopropylguanidine (TIPG), 2-butyl-1,3-diisopropylguanidine (BDPG), or their combination thereof.

3. The method according to claim 1 or 2, wherein the mixing is carried out at a temperature of 20°C to 40°C.

4. The method according to any one of claims 1 to 3, wherein the cellulose comprises microcrystalline cellulose, amorphous cellulose or cotton.

5. The method according to any one of claims 1 to 4, wherein the carbon dioxide in the mixing step and the contacting step has a pressure of at least 1 atm (101,325 Pa).

6. The method according to any one of claims 1 to 5, wherein the carbon dioxide in the mixing step and the contacting step has a pressure of 1 atm (101,325 Pa) to 20 atm (2,026,500 Pa).

7. The method according to any one of claims 1 to 6, wherein the mixing is carried out based on a molar ratio of organic base to cellulose-OH ranging from 0.50 to 3.00.

8. The method according to any one of claims 1 to 7, wherein the cellulose solution further comprises cellulose-O⁻ anions and/or a protonated form of the organic base.

9. The method according to any one of claims 1 to 8, wherein the protonated form of the organic base comprises [BTMG-H]⁺.

10. The method according to any one of claims 1 to 9, wherein the contacting is carried out at a temperature of 20°C to 40°C.

11. The method according to any one of claims 1 to 10, wherein the contacting is carried out for a duration of 1 hour to 72 hours.

12. The method according to any one of claims 1 to 11, wherein the one or more organochlorides are selected from the group consisting of benzyl chloride, 4-(trifluoromethyl) benzyl chloride, 4-methylbenzyl chloride, 4-(*tert*-butyl)benzyl chloride, 4-methoxybenzyl chloride, 3,4-dichlorobenzyl chloride, 2,4-dichlorobenzyl chloride, N-(4-(chloromethyl)phenyl)-4-(trifluoromethyl)benzamide, *N*-(4-(chloromethyl)phenyl)benzamide, 4-chloro-*N*-(4-(chloromethyl)phenyl)benzamide, and ethyl chloroacetate.

13. The method according to any one of claims 1 to 12, wherein the alcohol comprises methanol or ethanol.

14. The method according to any one of claims 1 to 13, wherein the water comprises deionized water.

15. The method according to any one of claims 1 to 14, wherein the cellulose carbonate comprises repeating units each represented by a formula of: 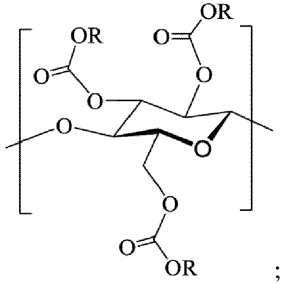 wherein each of the R is independently selected from the group consisting of

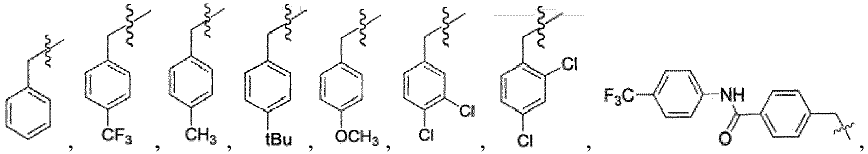

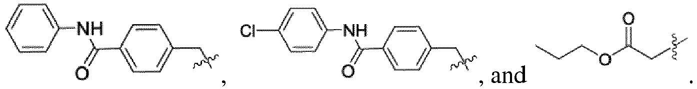

## Patentansprüche

1. Ein Verfahren zum Herstellen von Cellulosecarbonat, umfassend:
Mischen einer Lösung, die Dimethylsulfoxid und Cellulose umfasst, mit einer organischen Base in Gegenwart von Kohlendioxid, um eine Celluloselösung zu bilden, die Cellulosecarbonatanionen umfasst, wobei die organische Base dargestellt ist durch eine Formel: 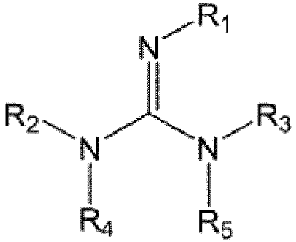
wobei jedes R₁, R₂ und R₃ C₁-C₂₀-Alkyl ist;
wobei jedes R₄ und R₅ Wasserstoff oder C₁-C₂₀-Alkyl ist;
In-Kontakt-Bringen der Celluloselösung mit einem oder mehreren Organochloriden in Gegenwart von Kohlendioxid, um Cellulosecarbonat zu bilden; und
Zugeben eines Alkohols oder Wasser, um das Cellulosecarbonat auszufällen.

2. Das Verfahren gemäß Anspruch 1, wobei die organische Base 2-tert-Butyl-1,1,3,3-tetramethylguanidin (BTMG), 1,2,3-Triisopropylguanidin (TIPG), 2-Butyl-1,3-diisopropylguanidin (BDPG) oder ihre Kombination davon umfasst.

3. Das Verfahren gemäß Anspruch 1 oder 2, wobei das Mischen bei einer Temperatur von 20 °C bis 40 °C durchgeführt wird.

4. Das Verfahren gemäß einem der Ansprüche 1 bis 3, wobei die Cellulose mikrokristalline Cellulose, amorphe Cellulose oder Baumwolle umfasst.

5. Das Verfahren gemäß einem der Ansprüche 1 bis 4, wobei das Kohlendioxid in dem Mischschritt und dem Kontaktierungsschritt einen Druck von mindestens 1 atm (101.325 Pa) aufweist.

6. Das Verfahren gemäß einem der Ansprüche 1 bis 5, wobei das Kohlendioxid in dem Mischschritt und dem Kontaktierungsschritt einen Druck von 1 atm (101.325 Pa) bis 20 atm (2.026.500 Pa) aufweist.

7. Das Verfahren gemäß einem der Ansprüche 1 bis 6, wobei das Mischen basierend auf einem molaren Verhältnis von organischer Base zu Cellulose-OH im Bereich von 0,50 bis 3,00 durchgeführt wird.

8. Das Verfahren gemäß einem der Ansprüche 1 bis 7, wobei die Celluloselösung ferner Cellulose-O⁻-Anionen und/oder eine protonierte Form der organischen Base umfasst.

9. Das Verfahren gemäß einem der Ansprüche 1 bis 8, wobei die protonierte Form der organischen Base [BTMG-H]⁺ umfasst.

10. Das Verfahren gemäß einem der Ansprüche 1 bis 9, wobei das In-Kontakt-Bringen bei einer Temperatur von 20 °C bis 40 °C durchgeführt wird.

11. Das Verfahren gemäß einem der Ansprüche 1 bis 10, wobei das In-Kontakt-Bringen für eine Dauer von 1 Stunde bis 72 Stunden durchgeführt wird.

12. Das Verfahren gemäß einem der Ansprüche 1 bis 11, wobei das eine oder die mehreren Organochloride ausgewählt sind aus der Gruppe bestehend aus Benzylchlorid, 4-(Trifluormethyl)benzylchlorid, 4-Methylbenzylchlorid, 4-(*tert*-Butyl)benzylchlorid, 4-Methoxybenzylchlorid, 3,4-Dichlorbenzylchlorid, 2,4-Dichlorbenzylchlorid, *N*-(4-(Chlormethyl)phenyl-4-(trifluormethyl)benzamid, *N*-(4-(Chlormethyl)phenyl)benzamid, 4-Chlor-*N-*(4-(chlormethyl)phenyl)benzamid und Ethylchloracetat.

13. Das Verfahren gemäß einem der Ansprüche 1 bis 12, wobei der Alkohol Methanol oder Ethanol umfasst.

14. Das Verfahren gemäß einem der Ansprüche 1 bis 13, wobei das Wasser deionisiertes Wasser umfasst.

15. Das Verfahren gemäß einem der Ansprüche 1 bis 14, wobei das Cellulosecarbonat Wiederholungseinheiten umfasst, dargestellt durch eine Formel: 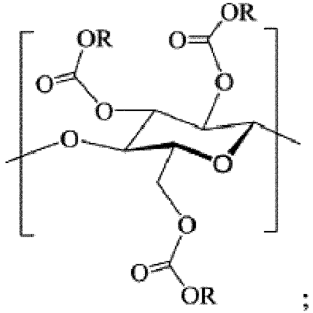 wobei jedes R unabhängig ausgewählt ist aus der Gruppe bestehend aus

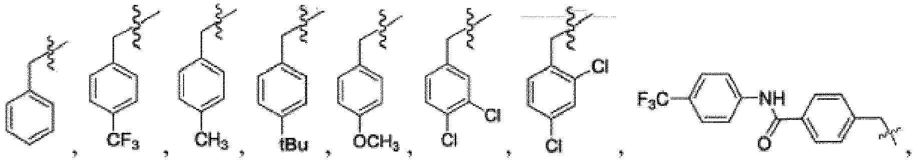

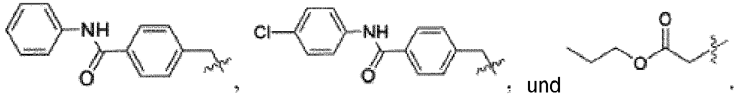

## Revendications

1. Procédé de synthèse de carbonate de cellulose, comprenant :
le mélange d'une solution comprenant du diméthylsulfoxyde et de la cellulose avec une base organique en présence de dioxyde de carbone pour former une solution de cellulose comprenant des anions carbonate de cellulose, dans lequel la base organique est représentée par la formule : 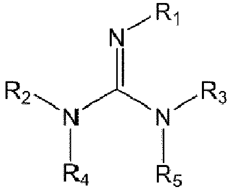
dans laquelle chacun de R₁, R₂ et R₃ est un alkyle en C₁ à C₂₀ ;
dans laquelle chacun de R₄ et R₅ est un hydrogène ou un alkyle en C₁ à C₂₀ ;
la mise en contact de la solution de cellulose avec un ou plusieurs chlorures organiques en présence de dioxyde de carbone pour former le carbonate de cellulose ; et
l'addition d'un alcool ou d'eau pour précipiter le carbonate de cellulose.

2. Procédé selon la revendication 1, dans lequel la base organique comprend de la 2-tert-butyl-1,1,3,3-tétraméthylguanidine (BTMG), de la 1,2,3-triisopropylguanidine (TIPG), de la 2-butyl-1,3-diisopropylguanidine (BDPG), ou leurs combinaisons.

3. Procédé selon la revendication 1 ou 2, dans lequel le mélange est effectué à une température de 20°C à 40°C.

4. Procédé selon l'une quelconque des revendications 1 à 3, dans lequel la cellulose comprend de la cellulose microcristalline, de la cellulose amorphe ou du coton.

5. Procédé selon l'une quelconque des revendications 1 à 4, dans lequel le dioxyde de carbone dans l'étape de mélange et l'étape de mise en contact a une pression d'au moins 101 325 Pa (1 atm).

6. Procédé selon l'une quelconque des revendications 1 à 5, dans lequel le dioxyde de carbone dans l'étape de mélange et l'étape de mise en contact a une pression de 101 325 Pa (1 atm) à 2 026 500 Pa (20 atm).

7. Procédé selon l'une quelconque des revendications 1 à 6, dans lequel le mélange est effectué sur la base d'un rapport molaire de la base organique à l'OH de cellulose situé dans la plage allant de 0,50 à 3,00.

8. Procédé selon l'une quelconque des revendications 1 à 7, dans lequel la solution de cellulose comprend en outre des anions O⁻ de cellulose et/ou une forme protonée de la base organique.

9. Procédé selon l'une quelconque des revendications 1 à 8, dans lequel la forme protonée de la base organique comprend [BTMG-H]⁺.

10. Procédé selon l'une quelconque des revendications 1 à 9, dans lequel la mise en contact est effectuée à une température de 20°C à 40°C.

11. Procédé selon l'une quelconque des revendications 1 à 10, dans lequel la mise en contact est effectuée pendant 1 heure à 72 heures.

12. Procédé selon l'une quelconque des revendications 1 à 11, dans lequel le ou les chlorures organiques sont choisis dans le groupe constitué par le chlorure de benzyle, le chlorure de 4-(trifluorométhyl)benzyle, le chlorure de 4-méthylbenzyle, le chlorure de 4-(*tert*-butyl)benzyle, le chlorure de 4-méthoxybenzyle, le chlorure de 3,4-dichlorobenzyle, le chlorure de 2,4-dichlorobenzyle, le *N*-(4-chlorométhyl)phényl)-4-(trifluorométhyl)benzamide, le *N*-(4-(chlorométhyl)phényl)benzamide, le 4-chloro-*N*-(4-(chlorométhyl)phényl)benzamide, et le chloroacétate d'éthyle.

13. Procédé selon l'une quelconque des revendications 1 à 12, dans lequel l'alcool comprend du méthanol ou de l'éthanol.

14. Procédé selon l'une quelconque des revendications 1 à 13, dans lequel l'eau comprend de l'eau désionisée.

15. Procédé selon l'une quelconque des revendications 1 à 14, dans lequel le carbonate de cellulose comprend des motifs répétitifs représentés chacun par la formule : 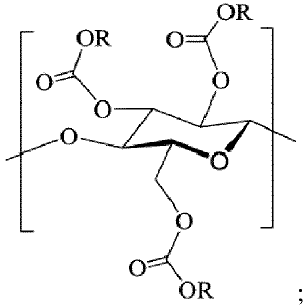 dans laquelle chaque R est indépendamment choisi dans le groupe constitué par
